Europäisches Patentamt

European Patent Office

Office européen des brevets

(19)

(11) Veröffentlichungsnummer: **0 339 106**

**A1**

(12) **EUROPÄISCHE PATENTANMELDUNG**

(21) Anmeldenummer: 88106669.0

(22) Anmeldetag: 26.04.88

(51) Int. Cl.4: **G11B 15/43 , G11B 15/50 , F16D 41/04 , F16D 47/04**

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **BRG Mechatronikai Vállalat**
**Polgár u. 8-10**
**H-1033 Budapest(HU)**

(72) Erfinder: **Nagy, Gabor**
**Gaal Jozsef utca 4**
**HU-1122 Budapest(HU)**
Erfinder: **Neumann, György**
**Ugosca utca 14**
**HU-1126 Budapest(HU)**
Erfinder: **Kovacs, Marta**
**Bajcsy-Zsilinszky ut 69**
**HU-2030 Erd(HU)**
Erfinder: **Strömpl, Andras**
**Tompa utca 19**
**HU-1094 Budapest(HU)**

(74) Vertreter: **Füchsle, Klaus, Dipl.-Ing. et al**
**Hoffmann . Eitle & Partner Patentanwälte**
**Arabellastrasse 4**
**D-8000 München 81(DE)**

(54) **Laufwerk zur Bandförderung für vor- und rücklaufende Magnetbandgeräte zur Datenerfassung und/oder Wiedergabe.**

(57) Laufwerk zur Bandförderung für vor- und rücklaufende Magnetbandgeräte zur Datenerfassung und/oder Wiedergabe, das einen das Magnetband (8) auf eine vorgegebene Geschwindigkeit antreibenden Antriebsmotor (19), eine mit dem Antriebsmotor (19) gekoppelte und an dem Gestell (1) des Gerätes gelagert befestigte Tonachse (2), ein die Bewegung der Tonachse (2) auf das Magnetband (8) übertragendes Vermittlungsorgan, zwei Spulenwellen (4, 5), auf die Spulenwellen (4, 5) aufbringbare Bandspindeln (6, 7) und an den Spulenwellen (4, 5) angeschlossene Aufspul- und Abspulmechanismen aufweist, wobei
-mit jeder der Spulenwellen (4, 5) eine asynchrone Aufspulkupplung (22 bzw. 23) und eine asynchrone Abspulkupplung (20 bzw. 21), die die erwähnten Mechanismen bilden, gekoppelt sind und die andere

Seite der Aufspulkupplungen (22 bzw. 23) an dem Antriebsmotor (19) angeschlossen ist, während die andere Seite der Abspulkupplungen (20, 21) an dem Gestell (1) angeschlossen ist, wobei von den erwähnten Anschlüssen an einer Spulenwelle (4 oder 5) gleichzeitig jeweils nur ein Anschluss aufrechterhalten ist und in Hinsicht auf die andere Spulenwelle (5 oder 4) die Anschlüsse dem Anschluss der ersten Spulenwelle (4 oder 5) umgekehrt ausgebildet sind.

Fig 2

# LAUFWERK ZUR BANDFÖRDERUNG FÜR VOR- UND RÜCKLAUFENDE MAGNETBANDGERAETE ZUR DATENERFASSUNG UND/ODER WIEDERGABE

Die Erfindung betrifft ein Laufwerk zur Bandförderung für vor- und rücklaufende Magentbandgeräte zur Datenerfassung und/oder Wiedergabe, insbesondere für mehrkanälige Daten- und Signalerfassungsgeräte, das einen das Magnetband auf eine vorgegeben Geschwindigkeit antreibenden Antriebsmotor, eine mit dem Antriebsmotor verbundene an dem Gestell des Gerätes gelagert befestigte Tonachse, ein deren Bewegung auf das Magnetband übertragende Vermittlungsorgan, zwei Spulenwellen, auf diese aufbringbare zwei Bandspindeln und an den Spulenwellen ageschlossene Aufspul- und Abspulmechanismen aufweist.

Laufwerke zur Bandförderung werden bei allen vor- und rücklaufenden Magentbandgeräten zur Datenerfassung udn/oder Wiedergabe verwendet. Die wichtigsten Merkmale derartiger Laufwerke und die damit verbundenen verschiedenen Eigenschaften werden im Zusammenhang mit der Anwendung in mehrkanäligen Datenerfassungsgeräten erläutert, da diese Anwendung die grösste Beanspruchung bildet. Derartige Geräte verwenden breite, dicke im allgemeinen mit einem Magnetband mit eine Länge von über 1000 m gefüllte Spindeln, deren Gewicht bei ca. 1 kg liegt. Aus der Eigenheit des Betriebes ergeben sich ein häufiges Anlassen, ein schnelles Vor- und Rückspulen, desweiteren eine häufige Richtungsänderung. Die Aufgabe des Laufwerkes besteht darin, dass es diesen Betriebsanforderungen auf die Weise genügt, dass dabei das Magnetband in einem ständigen gespannten, jedoch nicht überspannten Zustand bleibt, die transienten Bewegungen nicht auf das Magnetband übertragen werden und darüber hinaus das Magnetband auch bei auftretenden Betriebsstörungen (zum Beispiel Spannungsausfall) nicht beschädigt wird.

In den am meisten verbreiteten Laufwerken wird die Aufgabe mit Hilfe von drei Motoren gelöst, von denen der eine Motore die Funktion des Antriebsmotors versieht. Seine Aufgabe besteht in der Sicherung der vorgegebenen Geschwindigkeit das Magentbandes. Die beiden anderen Motoren sind den Spulenwellen zugeordnet und üben in Abhängigkeit von der augenblicklichen Betriebsart die zum Aufspulen erforderliche Spannkraft oder die zum Abspulen erforderliche Bremskraft aus. Ausserdem sorgen diese für die entsprechende Bandspannung im Falle von Beschleunigungen, Bremsungen (Verzögerungen), bzw. beim Schnellspulen. Da die den beiden Spulenwellen zugeordneten Motore in einer von der des Antriebsmotors abweichenden Betriebsart funktionieren, ist für deren entsprechende Steuerung und Synchronisierung zwischen den Motoren zu sorgen. Die Lösung dieser Aufgabe ist äusserst kompliziert, ein eventueller Ausfall der zur Realisierung erforderlichen komplizierten Schaltungen kann zu Fehlern führen, die die Beschädigung des Magnetbandes hervorrufen können.

Neben den hier erwähnten Eigenschaften sorgen bei den dreimotorigen Laufwerken gesonderte Mechanismen für die Befestigung der Spulenwellen bei stehendem Gerät, wozu lösbare Kupplungen (Bremsen) verwendet werden. Ein derartiges Laufwerk wird in einer Reihe bekannter Geräte, so zum Beispiel in den Geräten ICR 20 und ICR 40 der Firma Racal Recorders Limited (Grossbritannien) verwendet.

Es sind zwar auch mit sonstigen Laufwerken versehene Geräte bekannt, in Hinsicht auf die Gesamtheit ihrer Leistungen und die auftretenden Aufgaben kann jedoch der hier erwähnte Typ als der am weitesten entwickelte betrachtet werden.

Die mit der Erfindung zu lösende Aufgabe besteht in der Schaffung eines Laufwerkes zur Bandförderung, welches die erwähnten zusammengesetzten Funktionen mit einer einfacheren und zuverläSSIGEREN Ausführung versehen kann.

Zur Lösung der Aufgabe führte die Erkenntnis, dass die Anwendung eines einzigen Antriebsmotors ausreichend ist und die sich abwechselnde Inanspruchnahme der Spulenwellen unter Verwendung von je zwei asynchronen Kupplungen mit Hilfe eines von dem Antriebsmotor abgeleiteten Antriebsgetriebes gelöst werden kann.

Gemäss der Erfindung wurde ein Laufwerk zur Bandförderung für vor- und rücklaufende Magnetbandgeräte zur Datenerfassung und/oder Wiedergabe geschaffen, das einen das Magnetband auf eine vorgegebene Geschwindigkeit antreibenden Antriebsmotor, ene an dem Gestell das Gerätes gelagert befestigte Tonachse, ein die Bewegung der Tonachse auf das Magnetband übertragendes Vermittlungsorgan, zwei Spulenwellen, auf die Spulenwellen aufbringbare Bandspindeln und an den Spulenwellen angeschlossene Aufspul- und Abspulmechanismen aufweist, und gemäss der Erfindung mit jeder der Spulenwellen eine asynchrone Aufspulkupplung und eine asynchrone Abspulkupplung, die die erwähnten Mechanismen bilden, verbunden sind, wobei die andere Seite der Aufspulkupplungen an dem Antriebsmotor und die andere Seite der Abspulkupplungen an dem Gestell angeschlossen sind, wobei von den erwähnten Anschlüssen an einer Spulenwelle gleichzeitig nur der eine Anschluss besteht und hinsichtlich der zweiten Spulenwelle die Anschlüsse den Anschlüssen der ersten Spulenwelle entgegengesetzt sind.

Unter einer asynchronen Kupplung wird eine solche Vorrichtung verstanden, die zwischen zwei Drehwellen ein eine vorgegebene Grösse aufweisendes oder in einem vorgegebenen Bereich liegendes Moment (auch im dem Fall) übertragen kann, wenn die Drehzahlen der Wellen in einem bedeutenden Masse voneinander abweichen (z.B. eine Welle steht).

Bei einer bevorzugten Ausführungsform der erfindungsgemäss ausgebildeten Laufwerkes werden die einer Spulenwelle zugeordneten zwei asynchronen Kupplungen durch eine einzige zweiseitige asynchrone Kupplungsanordnung gebildet, die eine mit der Spulenwelle verbundene Mittelscheibe und zwei Freiläufe mit entgegengesetzter Sperrichtung aufweist, wobei die Verbindung mit dem Gestell bzw. mit dem Antriebsmotor über die Freiläufe ausgebildet ist.

In diesem Falle ist es vorteilhaft, wenn die zweiseitige asynchrone Kupplung von einer Magnetkupplung ausgebildet ist.

Bei einer anderen Ausführungsform der Erfindung weisen die den beiden Spulenwellen zugeordneten Freiläufe eine einander entgegengesetzte Sperrichtung auf.

In Hinsicht auf die konstruktionelle Ausbildung ist es vorteilhaft, wenn der Antriebsmotor und die Tonachse gleichachsig sind und auf dieser Tonachse ein von dem Magnetband teilweise umgebener und das erwähnte Vermittlungsorgan bildender bandfördernder Stumpf ausgebildet ist.

Hinsichtlich der Realisierung der entsprechenden Übersetzungen und Verbindungen ist es vorteilhaft, wenn der Antriebsmotor über ein Zahnrad mit an den Aufspulkupplungen befestigten Zahnrädern in Verbindung steht.

In dem Falle, wenn eine automatisch funktionierende zweiseitige asynchrone Kupplung verwendet wird, muss für das Einschalten der entsprechenden Kupplung und das Ausschalten der anderen Kupplung gesorgt werden. Zu diesem Zweck ist es von Vorteil, wenn mit den einer Spulenwelle zugeordneten asynchronen Kupplungen eine den Anschluss und die Freigabe steuernde gemeinsame Betätigungsvorrichtung gekoppelt ist.

Das erfindungsgemäss ausgebildete Laufwerk zur Bandförderung löst mit einfachen Mitteln die gestellte Aufgabe und sorgt bei allen Betriebsbedingungen und Ausserbetriebsbedingungen für die entsprechende Spannung des Bandes. Ein weiterer Vorteil der Erfindung besteht darin, dass das erfindungsgemässe Laufwerk mit bedeutend geringeren Kosten als die herkömmlichen Laufwerke verwirklicht werden kann.

Nachstehend wird die erfindungsgemässe Lösung anhand von Ausführungsbeispielen unter Bezugnahme auf die beigefügte Zeichnung näher beschrieben.

In der Zeichnung zeigen:

Fig. 1 eine Draufsicht auf ein ein erfindungsgemäss ausgebildetes Laufwerk beinhaltendes Gerät,

Fig. 2 einen Schnitt entlang der Ebene II-II in Fig. 1,

Fig. 3 eine andere Ausführungsform der Erfindung in einem dem Schnittbild in Fig. 2 ähnlichen Schnitt,

Fig. 4 ein Schema der in Fig. 3 veranschaulichten zweiseitigen Kupplungsanordnung.

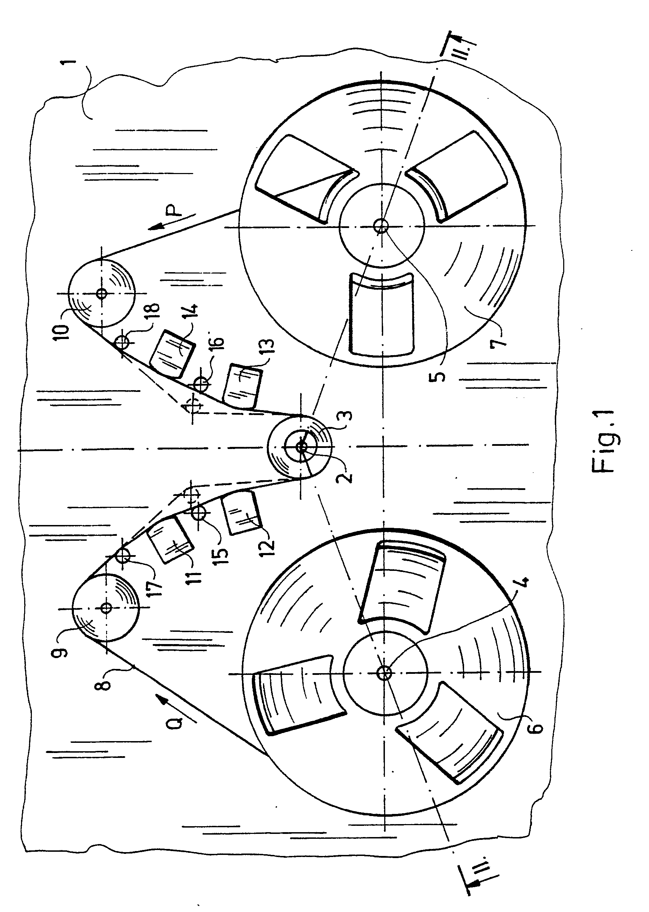

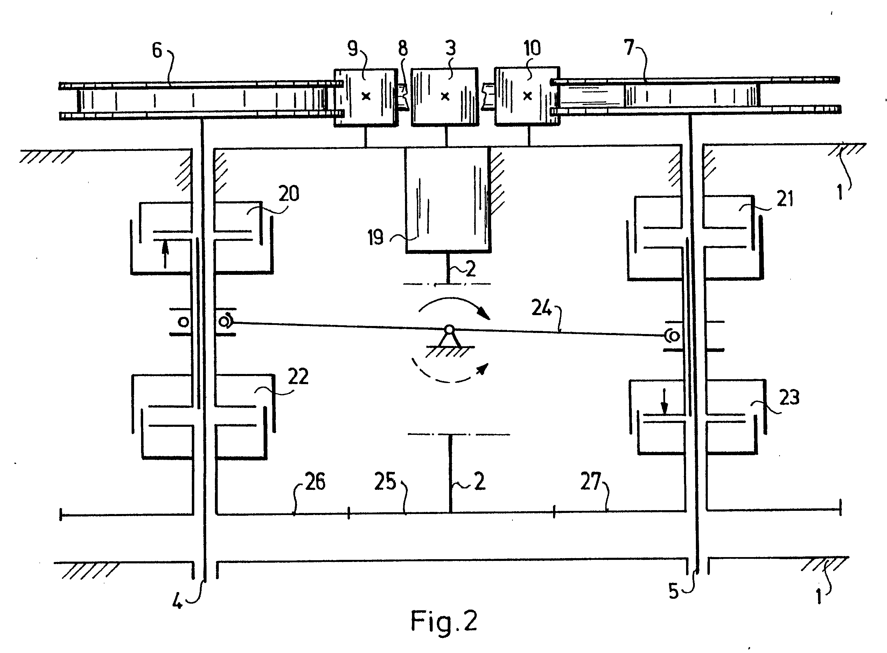

Das in den Figuren 1 und 2 veranschaulichte Laufwerk ist an einem Gestell 1 eines Magnetbanderfassungsgerätes angeordnet. Das zentrale Konstruktionselement des Laufwerkes wird von einer mittels eines Motors angetriebenen Tonachse 2 gebildet, die zu dem Gestell 1 senkrecht gerichtet ist und dazu gelagert befestigt ist. An dem äusseren Ende der Tonachse 2 ist ein bandfördernder Stumpf 3 ausgebildet, der von der Bandbahn entlang des Anliegeabschnittes von ca. 180° umgeben ist.

An dem Gestell 1 sind zu der Tonachse 2 parallel und zu dem Gestell 1 gelagert Spulenwellen 4, 5 angeordnet, auf die je eine Bandspindel 6 bzw. 7 aufgebracht werden kann. Die Bahn eines auf den Bandspindeln 6 und 7 befindlichen Magnetbandes 8 wird von Führungsrollen 9 und 10 und dem bandfördernde Stumpf 3 bestimmt. Entlang der Bahn sind löschende, aufnehmende und abspielende Köpfe 11, 12, 13 und 14 angeordnet. Zum Ausheben der Köpfe während des Schnellspulens sind entlang der Bahn bandhebende Rollen 15, 16 angeordnet, welche von einem gesteuerten Mechanismus in die mit gestrichelter Linie gekennzeichnete Position gebracht werden, in diesem Falle trifft die Bahn nicht auf die Köpfe 11 ... 14. Entlang der Bahn sind weiterhin Elemente 17, 18 zum Reinigen des Bandes angebracht.

In der Figur 2 sind die unter dem Gestell 1 angeordneten steuernden und bewegenden Elemente veranschaulicht. Die Tonachse 2 ist unmittelbar mit einem entsprechend ausgebildeten Antriebsmotor 19 gekoppelt, der bei entsprechender Steuerung nach links und rechts verdrehbar ist und dessen Drehzahl verstellbar ist. Die zum Einstellen der Betriebsdrehzahl verwendeten Detektor-, Regel- und Eingriffselemente wurden nicht angegeben, da diese nicht zu dem Gegenstand der Erfindung gehören.

Auf jeder der Spulenwellen 4 und 5 sind jeweils zwei asynchrone Kupplungen angeordnet. Von de jeweils einer Spulenwelle 4, 5 zugeordneten asynchronen Kupplungen sorgt die eine bei der Aufspulung und die andere bei der Abspulung für die entsprechende Bandspannung.

Das Magnetband 8 funktioniert in zwei Richtungen, deswegen ist bei beiden Spulenwellen die Sicherung beider Funktionen erforderlich.

Auf der Spulenwelle 4, bzw. um diese sind eine Abspulkupplung 20 und eine Aufspulkupplung 22 angeordnet, während auf der Spulenwelle 5 eine Abspulkupplung 21 und eine Aufspulkupplung 23 angeordnet sind.

Ein Anschluss der Abspulkupplungen 20 und 21 ist mit dem Gestell 1 des Gerätes gekoppelt, während der andere Anschluss der Abspulkupplungen 20 und 21 mit der Spulenwelle 4 bzw. 5 im Eingriff steht, bzw. die zuletzt genannte Verbindung kann auf die Weise realisiert bzw. freigegeben werden, dass gleichzeitig jeweils nur eine Kupplung mit einer Spulenwelle gekoppelt ist. Das eine Ende der Aufspulkupplungen 22 und 23 ist auf ähnliche Weise lösbar mit der Spulenwelle 4 bzw. 5 gekoppelt, und zwar kann gleichzeitig mit einer Spulenwelle jeweils nur eine Kupplung im Eingriff stehen. Das andere Ende der Aufspulkupplungen 22 und 23 ist mit einem an dem unteren Ende der Tonachse 2 montierten Zahnrad 25 über jeweils ein Zahnrad 26 bzw. 27 gekoppelt.

Wie bereits erwähnt wurde, sind die Aufspul- bzw. Abspulkupplungen 20, 21, 22 und 23 auf alternative Weise eingefügt. Wenn sich das Magnetband 8 in Richtung des Pfeiles P bewegt, steht die Aufspulkupplung 22 mit der Spulenwelle 4 und die Abspulkupplung 21 mit der Spulenwelle 5 in Verbindung, während die Verbindung der beide anderen Kupplungen gelöst ist. Bewegt sich nun das Magnetband 8 in entgegengesetzte Richtung, d.h. in Richtung des Pfeiles Q, ist die Abspulkupplung 20 mit der Spulenwelle 4 und die Aufspulkupplung 23 mit der Spulenwelle 5 in Verbindung, während die Verbindung der beiden anderen Kupplungen gelöst ist. Die dazu erforderliche Steuerung wird von einer Betätigungsvorrichtung 24, gemäss der Markierung von einem kippenden Schaltmechanismus gesichert, der mit der Richtungsänderung des Motors 19 gemeinsam gesteuert wird.

Die veranschaulichten asynchronen Kupplungen sind derart ausgebildet, zwischen ihren beiden Seiten unabhängig von der Drehzahldifferenz oder mit geringmässiger Abhängigkeit von dieser ein Brems- oder Antriebs-/ Moment entsteht. Die Verbindung ist nicht stark genug, dass die Seiten der Kupplung miteinander synchronisiert werden. Eine derartige Kupplung kann aus einer Reibkupplung, vorzugsweise jedoch unter Verwendung einer Magentkupplung ausgebildet werden, bei welcher die eine Schalthälfte von einem aus Magneten bestehenden mehrpoligen Ring gebildet ist, welchem eine aus magnetisierbarem Material bestehende Scheibe gegenüber angeordnet ist, die die andere Schalthälfte bildet. Das Magnetfeld ist zu dem sich ausbildenden Luftspalt senkrecht und polweise abwechselnd gegensinnig gerichtet.

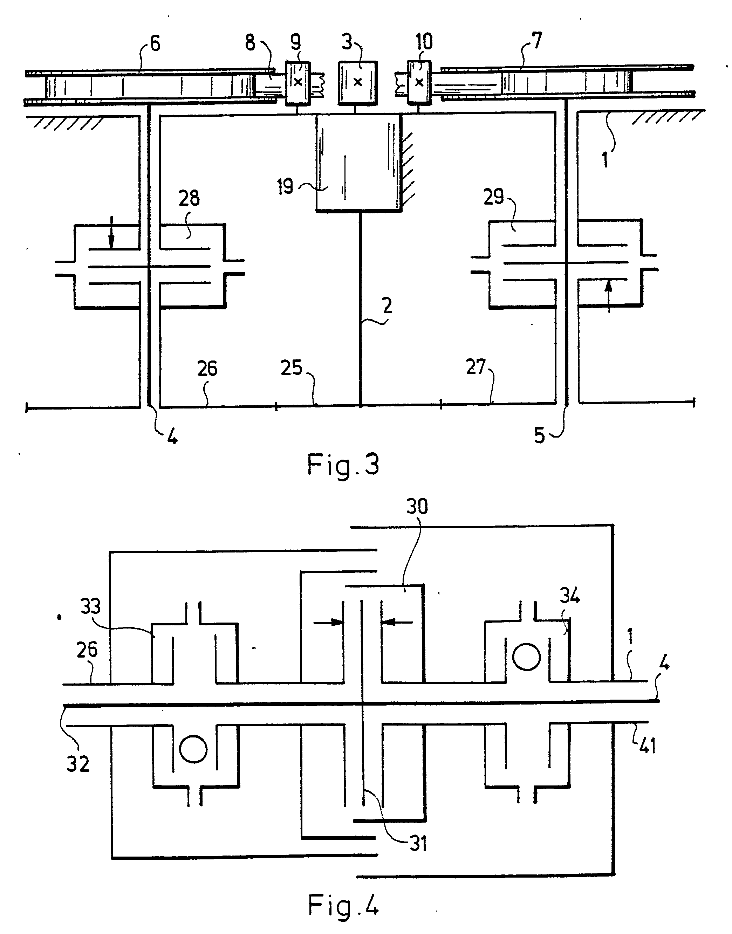

Die in der Fig. 3 veranschaulichte Anordnung ähnelt der in der Fig. 2 beranschaulichten, bei dieser wurde jedoch anstelle der je Spulenwelle jeweils zwei verwendeten asynchronen Kupplungen nur jeweils eine zweiseitige Kupplungsanordnung 28, 29 verwendet, deren Aufbau in der Figur 4 näher veranschaulicht ist. Eine derartige Kupplungsanordnung versieht die Aufspul-und Abspulfunktionen automatisch ohne Verwendung der Betätigungsvorrichtung 24, da ihre Verbindung von der Antriebsrichtung abhängt. Es ist verständlich, dass die in der Figur 3 veranschaulichte Anordnung vorteilhafter und kleiner als die in der Figur 2 veranschaulichte ist.

Den Mittelteil der in der Figur 4 veranschaulichten Kupplungsanordnung bildet eine zweiseitige Kupplung 30, deren Mittelscheibe 31 mit einer Innenachse 32 verbunden ist. Beide Seiten der Kupplung 30 sind mit jeweils einem Freilauf 33 bzw. 34 gekoppelt, deren Sperrichtungen einander entgegengesetzt sind.

Der Freilauf 33 ist in Richtung des Antriebsmotors 19 gekoppelt, während der Freilauf 34 in Richtung des Gestells 1 gekoppelt ist.

Die beiden Seiten der Kupplung 30 sind zum Beispiel von jeweils einer aus magnetisierbarem Material bestehenden Scheibe gebildet, während die Mittelscheibe 31 der Kupplung 30 von einem aus Magnetpolen bestehenden Ring ausgebildet ist, der beide gegenüberliegende Scheiben während der Drehung mit sich zu ziehen bestrebt ist und diese mit einem Moment antreibt, bzw. dadurch antreibbar sind.

Das erfindungsgemäss ausgebildete Laufwerk funktioniert folgenderweise:

Bei Bewegung des Magnetbandes 8 in Richtung des Pfeiles Q wird seine Geschwindigkeit von der Drehzahl der Tonachse 2 bestimmt, da der darauf befindliche bandfördernde Stumpf 3 von dem Magnetband 8 umgeben ist und zwischen diesen sich eine gleitfreie Verbindung ausbildet. Das Übersetzungsverhältnis der Zahnräder 25, 26 bzw. 27 ist derart ausgewählt, dass diese die jeweilige Aufspulwelle mit einer solchen Drehzahl zu drehen bestrebt sind, die eine im Vergleich mit der durch den bandfördernden Stumpf 3 bestimmte Bandgeschwindigkeit grössere Bandgeschwindigkeit ergeben würde. In dem vorliegenden Beispiel ist mit der Spulenwelle 5 das Zahnrad 27 über die Aufspulkupplung 23 in Verbindung. Die Bandspindel 7 spannt das Magnetband 8 und das über die Aufspulkupplung 23 übertragene Moment sorgt für die kontinuierliche Aufrechterhaltung der Spannkraft. Mit der anderen Spulenwelle 4 ist die an dem Gestell 1 angeschlossene Abspulkupplung 20 verbunden und ist bestrebt diese anzuhalten. Das Magnetband 8 wird jedoch von dem bandfördernden Stumpf 3 gezogen. Das Moment der Abspulkupplung 20 bremst das Band, infolgedessen bleibt das Band zwischen der Bandspindel 6 und dem bandfördernden Stumpf 3 entsprechend gespannt. Beim Schnellspulen verändern sich diese Bedingungen nicht, die Übermittlung der Zahnräder 25, 27 sorgt auch diesem Falle für die Spannung. Durch entsprechende Dimensionierung der Kupplungen kann gesichert werden, dass das Brems-, bzw. Spannmoment in dem Betriebsdrehzahlbereich immer den gewünschten Wert einnimmt. Die Anwendung der Kupplungen ist auch im Falle stehender Spindeln, bzw. bei Beschleunigungen oder Bremsungen (Verzögerungen) effektiv, somit können die transienten Bewegungen keine Überspannung oder Lockerung des Bandes hervorrufen.

Bei der Bewegung in entgegengesetzter Richtung wechseln die Spulenwellen 4 und 5 ihre Rollen (Funktionen) und unter den Kupplungen schalten sich die zu der entsprechenden Richtung gehörigen ein.

Die in den Figureen 3 und 4 veranschaulichte Lösung ist dadurch vorteilhafter, dass bei der Aufspulung der Freilauf 33 sperrt und die Aufspulseite der Kupplung 30 eingeschaltet (Motor-Spulenwelle Verbindung), in diesem Falle kann der in Richtung des Gestelles 1 befestigte Freilauf sich frei drehend kein Moment aufnehmen. Bei entgegengesetzter Richtung sperrt der Freilauf 34 und die Abspulseite der Kupplung schaltet sich ein (Gestell-Spulenwelle Verbindung), in diesem Falle dreht sich der in Richtung des Motors gerichtete Freilauf 33 frei und kann kein Moment übertragen. Aus der Funktion ergibt sich, dass die in den zweiseitigen Kupplungsanordnungen 28 und 29 befindlichen Freiläufe eine einander entgegengesetzte Sperrichtung aufweisen, in folgedessen ergibt sich, dass wenn auf der einen Seite eine Aufspulung erfolgt, die andere Seite im Abspulzustand funktioniert.

Für die in den Figuren 3 und 4 veranschaulichte Lösung sind die gleichen Funktionsbedingungen gültig wie bei der Ausführungsform gemäss der Figur 2.

In der Zeichnung wurde ein solches Ausführungsbeispiel veranschaulicht, bie welchem der Antriebsmotor 19 in der Tonachse 2 liegt, bzw. die Tonachse 2 über Zahnräder mit der entsprechenden Kupplung verbunden ist, es ist jedoch leicht ersichtlich, dass anstelle der Zahnradübertragung auch eine beliebige andersartige Übertragung, zum Beispiel Riemenübertragung, verwendet werden kann, auch der Antriebsmotor 19 kann über eine Übertragungseinrichtung mit der Tonachse 2 gekoppelt sein. Diese konstruktionellen Detailfragen beeinflussen die beschreibene Funktion des Laufwerkes nicht.

Bei der Anwendung des erfindungsgemässen Laufwerkes in vielkanäligen Magentbandgeräten zur Daten- und Ereigniser fassung ist eine Vielzahl an Vorteilen zu verzeichnen, die sich in der erhöhten Betriebssicherheit, desweiteren unter Betriebs- und Anomaliezuständen gleicherweise bemerkbar machen.

Die Funktion derartiger Geräte geht mit einem häufigen Anlassen, Verzögerungen, schnellen Vor- und Rückspulen, sowie Richtungsänderungen einher. Alle diese Funktionen können mit der vorgegebenen Grösse und dem vorgegebenen Vorzeichen der an den Klemmen des Antriebsmotors 19 geschalteten Spannung ohne weitere Eingriffe oder Steuerungen gesichert werden. Diese Eigenschaft vereinfacht die Steuerung in einem bedeutenden Mass. Das Bremsen der Bandbewegung kann durch eine an die Motorklemmen geschaltete Gegenspannung erreicht werden. Nach dem Stoppen des Bandes ist keine gesonderte Befestigungsbremseinrichtung erforderlich, da die asynchronen Kupplungen auch in stehender Lage ein der Betriebsbandspannung gleichgrosses Moment ausüben. Dieses Moment steht auch im Falle eines spannungsfreien Gerätes zur Verfügung. Wenn zum Beispiel wegen abnormaler Umstände die Speisespannung während des Betriebes ausfällt, bremst das sich selbst überlassene Laufwerk unter Aufrechterhaltung der Betriebsbandspannung, somit wird das Band und damit auch das Gerät nicht gefährdet.

Im Falle des Schnellspulens würde die sich drehende und eine grosse Masse und Trägheit aufweisende Spindel bei plötzlichem Bremsein oder bei plötzlichem Antriebsausfall zu einem Bandriss oder Überspannung des Bandes führen, alle diese Folgen treten bei dem erfindungsgemäss ausgebildeten Laufwerk nicht auf.

Die Erhöhung der Zuverlässigkeit kann dadurch erreicht werden, dass keine Konstruktionsteile verwendet werden, die betrieblich einer Abnutzung ausgesetzt sind, die Lebensdauer der auf magnetischem Prinzip funktionierenden asynchronen Kupplung ist praktisch unbegrenzt.

Aus der vereinfachten Ausführung ergibt sich, dass die Reibungsverluste, die bei dem Antrieb auftretenden Übersetzungsverluste wegfallen, bzw. in einem verringerten Masse erscheinen, wodurch auch die Leistungsaufnahme des Laufwerkes minimal ist. In Hinsicht auf die Fertigungskosten führt die Anwendung eines einzigen Motors anstelle der in den herkömmlichen Laufwerkes verwendeten drei Monaten zu einer bedeutenden Einsparung.

## Ansprüche

1. Laufwerk zur Bandförderung für vor- und rücklaufende Magnetbandgeräte zur Datenerfassung und/oder Wiedergabe, das einen das Magnetband (8) auf eine vorgegebene Geschwindigkeit antreibenden Antriebsmotor (19), eine mit dem Antriebsmotor (19) verbundene und an dem Gestell (1) des Gerätes gelagert befestigte Tonachse (2), ein die Bewegung der Tonachse (2) auf das Magnetband (8) übertragendes Vermittlungsorgan, zwei Spulenwellen (4, 5), auf die Spulenwellen (4, 5) aufbringbare Bandspindeln (6, 7), sowie an den Spulenwellen (4, 5) angeschlossene Aufspul- und Abspulmechanismen aufweist, dadurch **gekennzeichent,** daß jede der Spulenwellen (4, 5) mit einer Seite einer asynchronen Aufspulkupplung (22 bzw. 23) und einer asynchronen Abspulkupplung (20 bzw. 21) die die erwähnten Mechanismen bilden, gekoppelt sind, wobei je eine andere Seite der Aufspulkupplungen (22 bzw. 23) an dem Antriebsmotor (19) angeschlossen ist, während je eine andere Seite der Abspulkupplungen (20 bzw. 21) an dem Gestell (1) angeschlossen ist, wobei von den erwähnten Anschlüssen an einer Spulenwelle (4 oder 5) gleichzeitig jeweils nur der eine durchgesetzt ist und in Hinsicht auf die andere Spulenwelle (5 oder 4) die Anschlüsse dem Anschluß der ersten Spulenwelle (4 oder 5) entgegengesetzt sind.

2. Laufwerk nach Anspruch 1, dadurch **gekennzeichnet,** daß die einer Spulenwelle (4 oder 5) zugeordneten beiden asynchronen Kupplungen von einer einzigen zweiseitigen asynchronen Kupplungsanordnung (30) ausgebildet sind, die mit einer mit der Spulenwelle (4 oder 5) verbundenen Mittelscheibe (31) und zwei Freiläufen (33, 34) mit zueinander entgegengesetzter Sperrichtung versehen ist, wobei die Verbindung mit dem Gestell (1) bzw. dem Antriebsmotor (19) über die Freiläufe (33, 34) ausgebildet ist.

3. Laufwerk nach Anspruch 2, dadurch **gekennzeichnet,** daß die zweiseitige asynchrone Kupplung (30) eine Magnetkupplung ist.

4. Laufwerk nach Anspruch 2 oder 3, dadurch **gekennzeichnet,** daß die den beiden Spulenwellen (4 oder 5) zugeordneten Freiläufe mit einer zueinander entgegengesetzten Sperrichtung ausgebildet sind.

5. Laufwerk nach einem der Ansprüche 1 bis 4, dadurch **gekennzeichnet,** daß der Antriebsmotor (19) und die Tonachse (2) gleichachsig sind und auf dieser Tonachse (2) ein von dem Magnetband (8) teilweise umgebener und das erwähnte Vermittlungsorgan bildender bandfördernder Stumpf (3) ausgebildet ist.

6. Laufwerk nach einem der Ansprüche 1 bis 5, dadurch **gekennzeichnet,** daß der Antriebsmotor (19) über ein Zahnrad (25) mit an den Aufspulkupplungen (22, 23) befestigten Zahnrädern (26, 27) gekoppelt ist.

7. Laufwerk nach Anspruch 1, dadurch **gekennzeichnet,** daß mit den einer Spulenwelle (4 oder 5) zugeordneten asynchronen Kupplungen (20, 22 bzw. 21, 23) eine den Eingriff oder die Freigabe steuernde gemeinsame Betätigungsvorrichtung (24) gekoppelt ist.

Fig.1

EP 0 339 106 A1

Fig.2

Fig.3

Fig.4

Europäisches
Patentamt

EUROPÄISCHER RECHERCHENBERICHT

Nummer der Anmeldung

EP 88 10 6669

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 868 340 (L.D. WILSON et al.)<br>* Figur 1; Anspruch 5; Spalte 3, Linien 28-49 *<br>--- | 1,3 | G 11 B 15/43<br>G 11 B 15/50<br>F 16 D 41/04<br>F 16 D 47/04 |
| A | GB-A- 880 327 (TELEFUNKEN GMBH)<br>* Ansprüche 2,10; Figur 6 *<br>--- | 1,5 | |
| A | DE-A-1 474 554 (TELEFUNKEN GMBH)<br>* Figur 1; Seite 4, Linie 16 - Seite 5, Linie 8; Patentanspruch 1 *<br>----- | 1,3 | |

RECHERCHIERTE SACHGEBIETE (Int. Cl.4)

G 11 B 15/00
F 16 D 41/00
F 16 D 47/00
F 16 D 27/00

Der vorliegende Recherchenbericht wurde für alle Patentansprüche erstellt

| Recherchenort | Abschlußdatum der Recherche | Prüfer |
|---|---|---|
| BERLIN | 30-11-1988 | GERARD E.A.S. |